# DEMANDE DE BREVET EUROPEEN

(11) **EP 1 980 982 A1**
(43) Date de publication de la demande: **15.10.2008**
(21) Numéro de dépôt: 08290268.5
(22) Date de dépôt: 21.03.2008
(51) Int. Cl.: G06Q 10/00

(54) **Procédé et système de contrôle et d'authentification**

(30) Priorité: 21.03.2007 FR 0702059
(71) Demandeur: Appert, Jean-Pierre, 75019 Paris (FR); Pejcic, Nikola, 75011 Paris (FR); Lecomte, Jean, 75015 Paris (FR); Lecomte, Nicolas, 75116 Paris (FR); Lecomte, Marie, 75015 Paris (FR)
(72) Inventeur: Appert, Jean-Pierre, 75019 Paris (FR); Pejcic, Nikola, 75011 Paris (FR); Lecomte, Daniel, deceased (FR)
(74) Mandataire: Derambure, Christian

(57) **Abrégé**

Dans une première étape, on met en oeuvre un terminal (2), on procède à la lecture, saisie, captation d'un code d'identification de l'objet (1) à contrôler, le terminal (2) ayant été connecté à un serveur contenant une base de données d'indicateurs d'objet (4), on détermine au moyen d'un module de calcul, à partir de la base de données (4), l'indicateur (42) correspondant au code d'identification, on envoie l'indicateur (42) au terminal (2) via un réseau de télécommunication (3),

Dans une deuxième étape, le terminal (2) étant connecté à un serveur contenant une base de données de qualités d'objets (5), on détermine au moyen d'un module de calcul (24), l'expression du lieu supposé de l'objet (511), on envoie l'expression du lieu supposé (511) sur le terminal (2) puis on procède à une première comparaison entre l'expression du lieu constaté et l'expression du lieu supposé (511),

Dans une troisième étape, on interprète que le lieu constaté correspond au lieu supposé (511) comme significatif que l'objet est authentique.

## Description

L'invention est relative au contrôle et à l'authentification.

Elle concerne plus particulièrement un procédé de contrôle d'un objet en vue de déterminer si sa qualité constatée correspond ou non à sa qualité supposée, un tel procédé de contrôle spécialement destiné à contrôle l'authenticité d'un objet en vue de déterminer si cet objet est authentique et, enfin, un système de contrôle et d'authentification d'un objet, spécialement destiné à la mise en oeuvre du procédé de contrôle.

On sait que le phénomène de la contrefaçon de produits s'est beaucoup développé. Le phénomène concerne non seulement les produits de luxe ou portant des marques attractives, mais aussi les produits industriels ou des médicaments. Dès lors, la personne (physique ou morale) qui a devant elle le produit, parce qu'elle envisage de l'acheter ou parce qu'il lui a été livré, veut avoir la certitude que ce produit est bien un produit authentique, vrai, et non une contrefaçon.

On connaît déjà des procédés et systèmes qui permettent de contrôler si un produit est un produit authentique ou un produit contrefait, dans lesquels on se borne à lire un marqueur se trouvant sur le produit. De tels procédés et systèmes ont pour inconvénients et limites que le marqueur lui-même peut être un faux ou que le personnel peut ne pas mettre en oeuvre le procédé.

On connaît également le procédé qui consiste à prendre une image d'un produit, à envoyer ladite image sur un serveur et à demander audit serveur de lui donner la réponse pour savoir si ladite image est identifiable à l'image originale du produit original. Ce procédé a toutefois l'inconvénient principal que si l'image du produit en cause n'est pas prise dans les mêmes conditions que ladite image originale, le serveur peut donner une réponse négative alors même que le produit est un original.

On connaît également la solution qui consiste à marquer les produits, quelle que soit la matière : papier ou carton d'emballage, tubes de verre, matières plastiques, etc. On utilise par exemple des nano-traceurs électroluminescents. Cette technologie utilise des particules ou des pigments qui deviennent luminescents lorsqu'ils sont excités par un signal émis à une certaine fréquence. Ces traceurs sont utilisés pour répondre principalement à des besoins d'authentification et constituent des moyens de protection utilisable dans la lutte contre la contrefaçon. De la densité de ces traceurs et/ou de la quantité de matière « marquée » dépend la facilité de détection sur le terrain avec des outils simples.

On connaît également d'autres solutions consistant à marquer les produits par des marquages uniques, comportant une signature, le tout invisible à l'oeil nu, mais facilement détectable par un simple téléphone cellulaire.

Le document US 2004/0204053 se réfère généralement aux services susceptibles d'être offerts au moyen de systèmes de communication sans fil incluant une géo localisation. Dans une réalisation, il est prévu un dispositif de communication sans fil, dont la position peut être déterminée au moyen d'un système de localisation GPS, apte à lire le code d'un produit tel qu'un émetteur RFID ou un code barre et à permettre d'entrer manuellement un tel code. Ce dispositif de communication est apte, également, à sélectionner un service offert par un fournisseur d'accès, ayant une base de données comprenant les codes des produits, la localisation des établissements où ces produits sont disponibles, et les informations associées (prix). L'utilisateur du dispositif de communication sans fil peut alors, via l'Internet, informer le fournisseur d'accès qu'il souhaite utiliser les informations associés au produit et la localisation. Puis, l'utilisateur, grâce au dispositif de communication sans fil, identifie ou entre manuellement le code du produit. Il peut alors formuler des requêtes au fournisseur d'accès, tel que le prix du produit et sa disponibilité dans une zone géographique déterminée autour du lieu où il se trouve. Le fournisseur d'accès, tirant parti de sa base de données, peut alors répondre à l'utilisateur.

Le document WO 00/77704 décrit un procédé et un système de contrôle d'inventaire ayant pour but d'alerter l'opérateur lorsque des produits de l'inventaire, dotés d'émetteurs RFID ayant une portée déterminée, sont perdus ou mal rangés. Un système de gestion d'inventaire est apte à recevoir le signal émis par l'émetteur RFID, si celui-ci est dans la portée en question. Si le système ne reçoit pas le signal, il est conclu que le produit correspondant est absent, parce qu'il a été perdu ou est mal rangé.

Le document US 2005/0246248 décrit un procédé et un système faisant application des puces RFID d'identification de produits, en vue de déterminer l'emplacement des produits dans un espace confiné tel qu'un entrepôt.

Si ces documents prévoient la mise en oeuvre de moyens tels que puce RFID, lecteurs..., ils n'ont pas pour but ni pour objet de permettre de contrôler si tel produit est un produit authentique ou un produit contrefait.

Font également partie de l'état de la technique les documents US 2005/246248, US2004/098272, WO 2005/122021 et EP 1 126 399.

L'invention vise à permettre de contrôler si un produit est un produit authentique ou un produit contrefait, dans le contexte d'un procédé susceptible de pouvoir être mis en oeuvre en tout lieu où l'on dispose de l'objet, dès lors que l'on a à disposition un terminal dédié à la mise en oeuvre du procédé, susceptible d'être relié à un réseau de télécommunication. Par exemple, dans le contexte de l'invention, les lieux en questions sont des magasins ou des boutiques pouvant être en très grand nombre et se trouver n'importe où dans le monde, même à une distance très lointaine du lieu d'origine de l'objet authentique. En outre, l'invention vise à ce que ce contrôle d'authenticité puisse être réalisé de manière rapide pour ne pas dire instantanée, aussi automatisée que possible, et sans risque d'erreur, notamment du fait d'une défaillance humaine. Ce faisant, elle vise également à prévenir toute tentative de mise en échec du procédé par suite d'intentions malveillantes. L'invention a également pour but de permettre à l'acheteur du produit de vérifier par lui-même que le produit est authentique. Enfin, l'invention vise à permettre d'assurer une traçabilité des occurrences de non authenticité, ce qui permet de lutter contre la contrefaçon. Tel est le problème technique à la base de l'invention.

Plus généralement, elle vise à contrôler un objet en vue de déterminer si sa qualité constatée correspond ou non à sa qualité supposée.

A cet effet, selon un premier aspect, l'invention vise un procédé de contrôle spécialement destiné à contrôle l'authenticité d'un objet en vue de déterminer si cet objet est authentique, dans lequel :
- D'une part,
   o on dispose d'objets préalablement pourvus d'un marqueur incluant un code d'identification de l'objet, l'objet ayant un lieu constaté où il se trouve réellement et un lieu supposé où il est supposé se trouver s'il est authentique, le lieu pouvant être exprimée au moyens de signes (lettres, chiffres, symboles... ) susceptibles d'être transmis par télécommunication et traités de manière automatisée,
   o il a été constitué d'abord, au moins une base de données d'indicateurs d'objets comportant, pour chaque code d'identification, un indicateur apte à permettre d'identifier l'objet, au moins un serveur contenant cette au moins une base de données étant accessible via au moins un réseau de télécommunication,
   o il a été constitué - et actualisé - ensuite, au moins une base de données de lieux d'objets comportant pour chaque indicateur, l'expression du lieu supposé, au moins un serveur contenant cette au moins une base de données étant accessible via au moins un réseau de télécommunication,
   o on dispose d'un terminal doté de capacités de télécommunication avec le au moins un réseau de télécommunication et d'un dispositif de lecture et/ou de saisie et/ou de captation de tels dits codes d'identification, le cas échéant d'un dispositif de communication visuelle et/ou sonore,
   o on dispose d'au moins un module de calcul et de moyens de comparaison entre l'expression du lieu constaté et l'expression du lieu supposé,
- D'autre part, on dispose du lieu constaté où se trouve réellement l'objet,
- Et, dans une première étape :
   o on met en oeuvre le terminal et on procède à la lecture et/ou saisie et/ou captation du code d'identification de l'objet à contrôler,
   o puis, le terminal ayant été connecté au serveur contenant la au moins une base de données d'indicateurs d'objet, on détermine au moyen d'un module de calcul, et à partir de la au moins une base de données d'indicateurs d'objets, l'indicateur correspondant au code d'identification lu, saisi ou capté par le terminal,
   o enfin, on envoie l'indicateur au terminal via le au moins un réseau de télécommunication,
- Dans une deuxième étape :
   o le terminal étant connecté au serveur contenant la au moins une base de données de qualités d'objets, on détermine au moyen d'un module de calcul et à partir de la au moins une base de données de lieux d'objets l'expression du lieu supposé,
   o puis, on envoie l'expression dudit lieu supposé sur le terminal,
   o on procède à une première comparaison entre l'expression du lieu constaté et l'expression du lieu supposé,
- Dans une troisième étape, on interprète que le lieu constaté correspond au lieu supposé comme significatif que l'objet est authentique et, inversement, on interprète que le lieu constaté ne correspond pas au lieu supposé comme significatif que l'objet est contrefait.

Selon une réalisation, à la fin de la première étape, on procède à une seconde comparaison entre l'indicateur transmis par le terminal et des données de l'objet lui-même en correspondance avec l'indicateur

Selon une réalisation, on effectue au moins partiellement simultanément la première étape et la deuxième étape.

Selon une réalisation, on met en oeuvre le dispositif de communication visuelle et/ou sonore du terminal afin de communiquer un message spécifique sur la première et/ou la seconde comparaison.

Selon une réalisation, on dispose du lieu constaté où se trouve réellement l'objet par géolocalisation.

Selon un deuxième aspect, l'invention concerne un système spécialement destiné à la mise en oeuvre du procédé de contrôle d'authenticité qui vient d'être décrit, qui comporte la combinaison:
o d'au moins une base de données d'indicateurs d'objets apte à comporter, pour chaque code d'identification, l'indicateur,
o d'au moins une base de données de lieux d'objets apte à comporter pour chaque indicateur, le lieu supposé,
o d'au moins un serveur contenant cette au moins une base de données d'indicateurs d'objets,
o d'au moins un serveur contenant cette au moins une base de données de lieux d'objets,
o d'au moins un réseau de télécommunication, apte à permettre de communiquer avec les dits au moins un serveur,
o d'un terminal doté de capacités de télécommunication avec le au moins un réseau de télécommunication et pourvu en outre d'un dispositif de lecture et/ou de saisie et/ou de captation de tels dits codes d'identification,
o d'au moins un module de calcul et de premiers moyens de comparaison entre l'expression du lieu constaté et l'expression du lieu supposé.

Selon une réalisation, le serveur contenant la au moins une base de données d'indicateurs d'objets et le serveur contenant la au moins une base de données de lieux d'objets sont les mêmes.

Selon une réalisation, le serveur contenant la au moins une base de données d'indicateurs d'objets et le serveur contenant la au moins une base de données de lieux d'objets sont distincts.

Selon une première réalisation, les premiers moyens de comparaison sont associés, notamment situés dans, un serveur. Selon une seconde réalisation, les premiers moyens de comparaison sont associés, notamment situés dans, le terminal.

Selon une première réalisation, le module de calcul est associé, notamment situé dans, un serveur. Selon une seconde réalisation, le module de calcul est associé, notamment situé dans, le terminal.

Selon une réalisation, le système comporte en outre des seconds moyens de comparaison.

Selon une réalisation, le système comprend en outre des moyens de géolocalisation du terminal.

Selon un troisième aspect, l'invention concerne un procédé de contrôle d'un objet en vue de déterminer si sa qualité constatée correspond ou non à sa qualité supposée, la qualité pouvant être exprimée au moyens de signes (lettres, chiffres, symboles...), dans lequel :
- D'une part,
   o on dispose d'objets préalablement pourvus d'un marqueur incluant un code d'identification de l'objet,
   o il a été constitué d'abord, au moins une base de données d'indicateurs d'objets comportant, pour chaque code d'identification, un indicateur apte à permettre d'identifier l'objet, au moins un serveur contenant cette au moins une base de données étant accessible via au moins un réseau de télécommunication,
   o il a été constitué - et actualisé - ensuite, au moins une base de données de qualités d'objets comportant pour chaque indicateur, l'expression de la qualité supposée, au moins un serveur contenant cette au moins une base de données étant accessible via au moins un réseau de télécommunication,
   o on dispose d'un terminal doté de capacités de télécommunication avec le au moins un réseau de télécommunication et d'un dispositif de lecture et/ou de saisie et/ou de captation de tels dits codes d'identification, le cas échéant d'un dispositif de communication visuelle et/ou sonore,
   o on dispose d'au moins un module de calcul et de moyens de comparaison entre l'expression d'une qualité constatée et l'expression d'une qualité supposée,
- D'autre part, on dispose de l'expression de la qualité constatée,
- Et, dans une première étape :
   o on met en oeuvre le terminal et on procède à la lecture et/ou saisie et/ou captation du code d'identification de l'objet à contrôler,
   o puis, le terminal ayant été connecté au serveur contenant la au moins une base de données d'indicateurs d'objet, on détermine au moyen d'un module de calcul, et à partir de la au moins une base de données d'indicateurs d'objets, l'indicateur correspondant au code d'identification lu, saisi ou capté par le terminal,
   o enfin, on envoie l'indicateur au terminal via le au moins un réseau de télécommunication,
- Dans une deuxième étape :
   o le terminal étant connecté au serveur contenant la au moins une base de données de qualités d'objets, on détermine au moyen d'un module de calcul et à partir de la au moins une base de données de qualités d'objets (5) l'expression de la qualité supposée,
   o puis, on envoie l'expression de la dite qualité supposée sur le terminal,
   o enfin, on procède à une première comparaison entre l'expression de la qualité constatée et l'expression de la qualité supposée et on en déduit que l'objet a ou non la qualité supposée.

Selon une réalisation, on associe l'objet à une personne, un service ou un produit ayant une qualité constatée et une qualité supposée et, une fois que l'on a déduit que l'objet a ou non la qualité supposée, on déduit que ce à quoi est associé l'objet a ou non la qualité supposée qui le concerne.

Selon une réalisation, à la fin de la première étape, on procède à une seconde comparaison entre l'indicateur transmis par le terminal et l'indicateur de l'objet lui-même.

Selon une réalisation, dans une troisième étape, on interprète que l'objet a ou non la qualité supposée, comme significatif que l'objet ou ce qui lui est associé a ou non une propriété liée à l'identité ou non entre la qualité constatée et la qualité supposée.

Selon une réalisation, on effectue au moins partiellement simultanément la première étape et la deuxième étape.

Selon une réalisation, on met en oeuvre le dispositif de communication visuelle et/ou sonore du terminal afin de communiquer un message spécifique sur la première et/ou la seconde comparaison.

Selon une réalisation, on dispose de l'expression de la qualité constatée par un moyen humain ou un moyen automatique, incluant notamment la géolocalisation.

Selon une application, le procédé de contrôle tel qu'il vient d'être décrit est spécialement destiné à contrôle l'authenticité d'un objet en vue de déterminer si cet objet est authentique. Dans ce procédé :
- il a été constitué - et actualisé -, la au moins une base de données de lieux d'objets comportant pour chaque indicateur, l'expression du lieu où l'objet est supposé se trouver,
- on dispose du lieu constaté où se trouve l'objet,
- on dispose de moyens de comparaison entre le lieu constaté et le lieu où l'objet est supposé se trouver,
- dans la deuxième étape on procède à une première comparaison entre le lieu constaté et le lieu supposé,
- dans la troisième étape, on interprète que le lieu constaté correspond au lieu supposé comme significatif que l'objet est authentique et, inversement, on interprète que le lieu constaté ne correspond pas au lieu supposé comme significatif que l'objet est contrefait.

Selon un quatrième aspect, l'invention vise un système spécialement destiné à la mise en oeuvre du procédé de contrôle ou d'authentification tel qu'il vient d'être décrit, qui comporte la combinaison:
o au moins une base de données d'indicateurs d'objets apte à comporter, pour chaque code d'identification, l'indicateur,
o au moins une base de données de qualités d'objets apte à comporter pour chaque indicateur, la qualité supposée,
o au moins un serveur contenant cette au moins une base de données d'indicateurs d'objets,
o au moins un serveur contenant cette au moins une base de données de qualités d'objets,
o au moins un réseau de télécommunication, apte à permettre de communiquer avec les dits au moins un serveur,
o un terminal doté de capacités de télécommunication avec le au moins un réseau de télécommunication et pourvu en outre d'un dispositif de lecture et/ou de saisie et/ou de captation de tels dits codes d'identification,
o au moins un module de calcul et de premiers moyens de comparaison entre l'expression d'une qualité constatée et l'expression d'une qualité supposée.

Selon une première réalisation, le serveur contenant la au moins une base de données d'indicateurs d'objets et le serveur contenant la au moins une base de données de qualités d'objets sont les mêmes. Selon une seconde réalisation, ces serveurs sont distincts.

Selon une première réalisation, les premiers moyens de comparaison sont associés, notamment situés dans, un serveur. Selon une seconde réalisation, les premiers moyens de comparaison sont associés, notamment situés dans, le terminal.

Selon une première réalisation, le module de calcul est associé, notamment situé dans, un serveur. Selon une seconde réalisation, le module de calcul est associé, notamment situé dans, le terminal.

Selon une réalisation, le système comporte en outre des seconds moyens de comparaison.

Selon les réalisations, pour disposer de l'expression de la qualité constatée, le système comprend un moyen humain ou un moyen automatique, incluant notamment la géolocalisation.

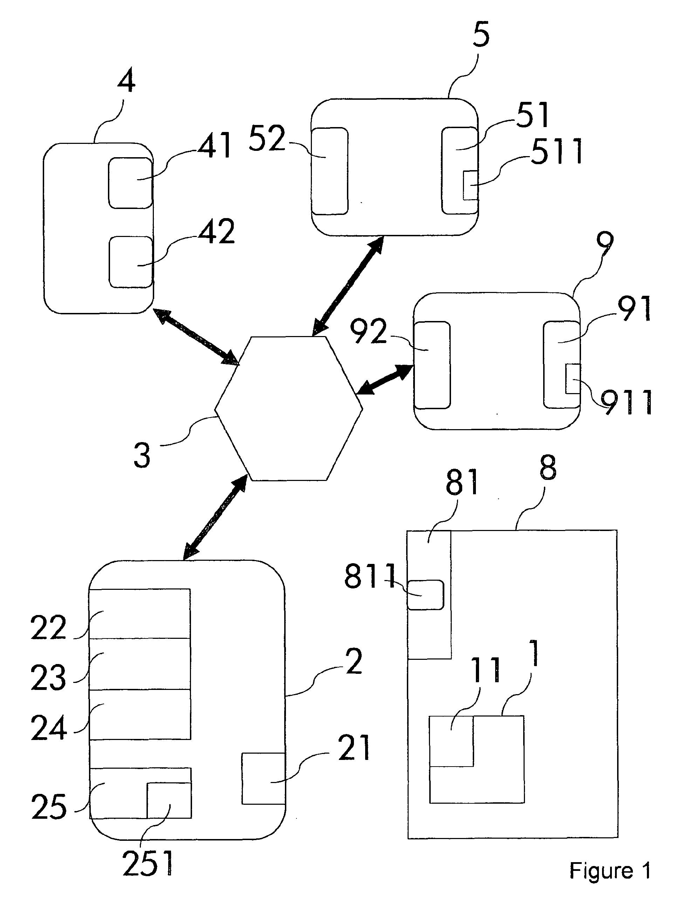

L'invention sera bien comprise à la lecture de la description qui suivra de la réalisation relative au contrôle de l'authenticité d'un objet en vue de déterminer si cet objet est authentique, référence à la figure unique 1 annexée qui illustre le procédé et le système selon l'invention.

Le procédé de contrôle qui est maintenant décrit est spécialement destiné à contrôler l'authenticité d'un objet 1, en vue de déterminer si cet objet 1 est authentique, c'est-à-dire n'est pas contrefait.

Le mot « contrefait » tel qu'il est utilisé ici signifie que l'objet n'est pas l'objet authentique, que cet objet soit protégé ou non par un droit de propriété intellectuelle. « Contrefait » est donc synonyme de « faux » ou de « copie ».

Le contexte spécifique de ce procédé est de pouvoir être mis en oeuvre en tout lieu où l'on dispose de l'objet 1, dès lors que l'on a à disposition un terminal 2 susceptible d'être relié à un réseau de télécommunication 3.

Par exemple, les lieux en questions sont des magasins ou des boutiques pouvant être en très grand nombre et se trouver n'importe où dans le monde, même à une distance très lointaine du lieu d'origine de l'objet authentique.

On appelle « tag » tout identifiant qui permet de marquer un objet.

En fonction de la technologie d'implémentation, des particularités de l'objet et des choix de fabrication et d'ergonomie, le tag peut être :
- attaché à l'objet
- sur une étiquette attachée à l'objet
- collé sur l'objet
- imprimé sur l'objet
- incorporé dans l'objet
- ou tout autre agencement analogue.

Un tel objet 1, peut être, par exemple, un sac à main.

L'objet 1 est marqué par un tag 11.

Il est prévu un terminal 2 qui inclut un dispositif 21 de lecture de tags.

Selon les cas, le dispositif 21 est physiquement intégré au terminal 2, ou il en constitue une option.

Le dispositif 21 peut être un lecteur de badges, un lecteur de radio étiquettes RFID (ou RFID tags, RFID : Radio Frequency IDentification), un appareil photo, un dispositif Bluetooth, ou tout autre dispositif équivalent à capteur permettant de lire les tags.

Le terminal 2 est par exemple un téléphone cellulaire, ou tout autre terminal ayant des capacités de télécommunication et d'affichage.

Le terminal 2 peut être également un assistant personnel ou ordinateur de poche est un appareil numérique portable (ou PDA pour Personal Digital Assistant).

Le terminal 2 peut être également un stylo avec système de détection par caméra ou tout autre dispositif, une montre avec une liaison sans fil, un lecteur de code barres, un scanner, ou tout autre terminal avec dispositif de lecture de tags.

Le terminal 2, par le moyen du dispositif de lecture 21, peut lire le tag 11 de l'objet objet 1.

Il est prévu un module 22 d'interprétation des données inscrites sur le tag 11 en extrait les informations nécessaires au procédé.

Dans une première étape, le terminal 2 est connecté automatiquement à un premier serveur contenant une base de données des indicateurs d'objets 4 via le réseau de télécommunication 3.

On met en oeuvre un protocole 23, de manière que le terminal 2 puisse communiquer avec un module de vérification 41 de la base de données des indicateurs d'objets 4.

Dans une réalisation, les indicateurs de la base de données des indicateurs d'objets 4 sont des numéros de série des objets.

Dans une autre réalisation, les indicateurs de la base de données des indicateurs d'objets sont d'autres éléments, tels que, de façon non limitative, des numéros de code barre, des numéros d'identification de fabrication, des numéros du code D2 Data Matrix, des codes ou des numéros d'articles apposés par des technologies de type laser ou autres, des Pharma Code LAETUS, des codes RSS14, des CIP code 39, des vignettes classiques, des vignettes séquentielles, de l'encre magnétique, des codes du tag, des numéros d'identité d'un émetteur sans fil (RFID, WIFI, etc.), ou tout autre indicateur existant des objets.

Après s'être identifié sur la base de données des indicateurs d'objets 4, le terminal 2 envoie à la base de données des indicateurs d'objets 4 les informations contenues sur le tag 11, et reçoit en retour l'indicateur 42 de l'objet 1.

Dans une réalisation, l'indicateur 42 de l'objet 1 contient la description complète (taille, couleur, caractéristiques, etc.) de l'objet 1 qui peut être affichée sur un écran dont est pourvu le terminal 2. Cette description peut comprendre la photo de l'objet 1, ce qui permet ainsi à la personne regardant l'écran du terminal 2, de comparer la description reçue sur l'écran avec l'objet 1.

Dans une deuxième étape, en utilisant un autre module de calcul 24, le terminal 2 est automatiquement connecté à un deuxième serveur contenant une base de données des lieux des objets 5, et envoie l'indicateur 42 précédemment reçu au module de calcul 51 de la base de données des lieux des objets 5.

Le terminal 2 reçoit, en retour, l'information sur le lieu 511 où ledit objet 1 est supposé se trouver.

La base de données des lieux des objets 5 avait auparavant été mise à jour par un gestionnaire qui avait précisé que l'objet 1 se trouve au lieu 511.

Le lieu 511 peut être composé de simples coordonnées géographiques, ou de la ville et de l'adresse du local dans lequel il se trouve, ou de toute autre indication d'identification.

L'utilisateur du terminal 2 peut alors vérifier si le lieu où il se trouve est bien identique audit lieu 511 où est supposé se trouver l'objet 1 qu'il souhaite identifier.

Dans une troisième étape, on interprète que le lieu constaté correspond au lieu supposé comme significatif que l'objet 1 est authentique et, inversement, on interprète que le lieu constaté ne correspond pas au lieu supposé comme significatif que l'objet est contrefait.

Ainsi, l'invention propose un procédé de contrôle de l'authenticité d'un objet 1, en vue de déterminer si cet objet 1 est authentique, c'est-à-dire n'est pas contrefait fondé sur le moyen de la comparaison entre le lieu constaté et le lieu supposé de l'objet en question 1.

Dans une réalisation, la base de données des indicateurs d'objets 4 et la base de données des lieux des objets 5 se trouvent sur un même serveur. Dans une autre réalisation, elles sont sur des serveurs distincts.

Dans une réalisation, la première et la deuxième étapes sont réalisées au moins partiellement simultanément.

Dans une réalisation, le terminal 2 met en oeuvre un dispositif de localisation 25 afin de déterminer le lieu 251 où se trouve ce terminal 2. Un tel dispositif de localisation 25 est par exemple intégré au terminal 2 afin de déterminer, par exemple à travers une infrastructure de type GPS, le lieu 251 où se trouve le terminal 2.

Dans une réalisation, le dispositif de localisation 25 utilise les informations en provenance des relais et autres stations de base cellulaires du réseau de télécommunication afin de déterminer le lieu 251 où se trouve ledit terminal 2.

Le lieu 251 où se trouve le terminal 2 est alors comparé au lieu 511 où est supposé se trouver l'objet 1 que l'on souhaite identifier.

Dans une réalisation, un message spécifique est affiché sur le terminal 2 si ledit lieu 251 où se trouve le terminal 2 n'est pas identique au lieu 511 où est supposé se trouver l'objet 1.

Dans une réalisation, un autre type de message spécifique est affiché sur le terminal 2 si le lieu 251 où se trouve le terminal 2 est identique au lieu 511 où est supposé se trouver ledit objet 1.

Le cas échéant, un message spécial est envoyé via le réseau de télécommunication 3, à un serveur ou à un autre dispositif de surveillance, si le lieu 251 où se trouve le terminal 2 n'est pas identique au lieu 511 où est supposé se trouver l'objet 1.

Dans une réalisation, un autre type de message spécial est envoyé via le réseau de télécommunication 3, à un serveur ou à un autre dispositif de surveillance, si le lieu 251 où se trouve le terminal 2 est identique au lieu 511 où est supposé se trouver l'objet 1.

Ce dispositif de surveillance est par exemple un terminal téléphonique, une station d'alerte ou tout autre dispositif qui permet de recevoir des messages d'alerte et de surveillance apte à délivrer une information sur une possible contrefaçon.

Ce message spécial permet d'informer une personne munie du dispositif de surveillance, que l'objet 1 se trouve dans un lieu différent de celui dans lequel il devrait se trouver, ou alors que ledit objet est probablement une contrefaçon.

Dans une réalisation, le lieu 511 où est supposé se trouver l'objet 1 comporte également toutes les informations sur le magasin dans lequel ledit objet 1 est supposé se trouver.
Cela permet ainsi à la personne du terminal 2 de savoir si l'objet 1 peut se trouver dans le magasin 8 dans lequel il se trouve, et ainsi savoir si ledit objet 1 est contrefait ou non.

Si la personne qui possède le terminal 2 décide d'acheter l'objet 1, il est prévu une procédure de mise à jour ladite base de données des lieux des objets 5, afin d'indiquer que le nouveau lieu où se trouve maintenant l'objet 1 est le lieu où se trouve le terminal 2.

Dans une réalisation, il est prévu une autre procédure de mise à jour de la base de données des lieux des objets 5, afin d'indiquer que le nouveau lieu où se trouve maintenant l'objet 1 est le lieu de résidence du terminal 2, ou tout autre lieu, permettant ainsi de désigner en permanence le lieu où se trouve l'objet 1.

Dans une réalisation, le magasin 8 est également marqué par un autre marqueur 81.

Ce marqueur ou tag 81 est par exemple un code barre sur la vitrine dudit magasin 8.

Ce marqueur ou tag 81 peut également être un badge RFID, un émetteur sans fil, ou tout moyen équivalent.

Comme précédemment, le terminal 2, par le biais du dispositif de lecture 21, lit le tag 81 du magasin 8. Le module d'interprétation 22 des données inscrites sur le tag 81 en extrait les informations et en particulier le lieu 811 où se trouve le magasin 8.

Le lieu 811 où se trouve le magasin 8 est alors comparé au lieu 511 où est supposé se trouver l'objet 1 que l'on souhaite identifier.

Cette comparaison permet ainsi à la personne du terminal 2 de savoir si l'objet 1 peut se trouver dans le magasin 8, et ainsi savoir si l'objet 1 est contrefait ou non.

Comme précédemment, un message spécifique peut être affiché sur le terminal 2 si le lieu 811 où se trouve le magasin 8 n'est pas identique au lieu 511 où est supposé se trouver l'objet 1.

Selon une réalisation, un message spécial est envoyé via le réseau de télécommunication 3, à un serveur ou à un autre dispositif de surveillance, si le lieu 811 où se trouve le magasin 8 n'est pas identique au lieu 511 où est supposé se trouver l'objet 1.

Dans une réalisation, le terminal 2 est connecté à travers le réseau de télécommunication 3 à une base de données des magasins 9, et transmet à son module de calcul 91 les informations lues sur le tag 81 du magasin 8. Le terminal 2 reçoit en retour toutes les caractéristiques 911 du magasin 8. Ces caractéristiques 911 sont ensuite comparées aux caractéristiques du magasin 8 dans lequel se trouve l'objet 1 que l'on souhaite identifier, permettant ainsi de valider le magasin 8.

Dans une réalisation, la base de données des indicateurs d'objets 4, la base de données des lieux des objets 5 et la base de données des magasins 9 se trouvent sur un même serveur.

Le procédé qui vient d'être décrit peut être généralisé en tant que procédé de contrôle d'un objet en vue de déterminer si sa qualité constatée correspond ou non à sa qualité supposée, la qualité pouvant être exprimée au moyens de signes (lettres, chiffres, symboles...).

Dans ce procédé :
- D'une part,
   o on dispose d'objets préalablement pourvus d'un marqueur incluant un code d'identification de l'objet,
   o il a été constitué d'abord, au moins une base de données d'indicateurs d'objets comportant, pour chaque code d'identification, un indicateur apte à permettre d'identifier l'objet, au moins un serveur contenant cette au moins une base de données étant accessible via au moins un réseau de télécommunication,
   o il a été constitué - et actualisé - ensuite, au moins une base de données de qualités d'objets comportant pour chaque code d'identification, l'expression de la qualité supposée, au moins un serveur contenant cette au moins une base de données étant accessible via au moins un réseau de télécommunication,
   o on dispose d'un terminal doté de capacités de télécommunication avec le au moins un réseau de télécommunication et d'un dispositif de lecture et/ou de saisie et/ou de captation de tels dits codes d'identification, le cas échéant d'un dispositif de communication visuelle et/ou sonore,
   o on dispose d'au moins un module de calcul et de moyens de comparaison entre l'expression d'une qualité constatée et l'expression d'une qualité supposée,
- D'autre part, on dispose de l'expression de la qualité constatée,
- Et, dans une première étape :
   o on met en oeuvre le terminal et on procède à la lecture et/ou saisie et/ou captation du code d'identification de l'objet à contrôler,
   o puis, le terminal ayant été connecté au serveur contenant la au moins une base de données d'indicateurs d'objet, on détermine au moyen d'un module de calcul, et à partir de la au moins une base de données d'indicateurs d'objets, l'indicateur correspondant au code d'identification lu, saisi ou capté par le terminal,
   o enfin, on envoie l'indicateur au terminal via le au moins un réseau de télécommunication,
- Dans une deuxième étape :
   o le terminal étant connecté au serveur contenant la au moins une base de données de qualités d'objets, on détermine au moyen d'un module de calcul et à partir de la au moins une base de données de qualités d'objets (5) l'expression de la qualité supposée,
   o puis, on envoie l'expression de la dite qualité supposée sur le terminal,
   o enfin, on procède à une première comparaison entre l'expression de la qualité constatée et l'expression de la qualité supposée et on en déduit que
   l'objet a ou non la qualité supposée.

Selon une réalisation, la finalité du contrôle est directement l'objet lui-même, comme dans la réalisation de l'authentification vrai/faux décrite plus haut.

Selon une autre réalisation, la finalité du contrôle est une personne, un service ou encore un produit auquel l'objet est associé - tel qu'un emballage, un conteneur, un moyen de stockage ou de transport - et, en quelque sorte assimilé, l'objet étant alors le moyen indirect de l'authentification.

Dans ce cas, le procédé est tel que l'on associe l'objet à une telle personne, un tel service ou un tel produit ayant une qualité constatée et une qualité supposée et, une fois que l'on a déduit que l'objet a ou non la qualité supposée, on déduit que ce à quoi est associé l'objet a ou non la qualité supposée qui le concerne.

On entend ici par « objet », toute entité matérielle plus ou moins simple ou complexe, unitaire ou non, de quelque nature que ce soit. Par exemple, il peut s'agir d'une matière première ou semi finie, d'un produit cosmétique ou de luxe, d'un bagage, d'un produit agricole, viticole, horticole ou d'élevage, d'un vêtement, d'un jeu ou d'un jouet, de phonogramme ou de vidéogramme, de matériel de sport, de matériel électrique ou électronique, électroménager, médical, d'emballage, de stockage, de transport, de pièces détachées ou consommables, ou encore de valeurs fiduciaires.

La qualité est par exemple l'identité même de l'objet ou sa conformité avec les propriétés qu'il est censé avoir ou les conditions dans lesquelles il est censé se trouver. Par exemple, il peut s'agir d'un lieu (lieu où se trouve l'objet vs. lieu où il devrait se trouver), d'une date (date du jour vs. date de péremption ou de limite de vente)...

Selon une réalisation, on dispose de la qualité constatée par un moyen humain ou un moyen automatique, incluant notamment la géolocalisation dans le cas de la réalisation mentionnée ci-dessous où la qualité est un lieu.

Selon une réalisation du procédé qui vient d'être décrit, mise en oeuvre dans le cas de l'authentification vrai/faux, il est prévu une troisième étape, dans laquelle on interprète que l'objet 1 a ou non la qualité supposée, comme significatif que l'objet ou ce qui lui est associé a ou non une propriété liée à l'identité ou non entre la qualité constatée et la qualité supposée.

En l'espèce, la qualité est le lieu - lieu où se trouve l'objet vs. lieu où il devrait se trouver - et la propriété est le vrai ou le faux.

L'invention est remarquable en ce qu'elle met en oeuvre une comparaison portant sur une qualité pour en déterminer une propriété.

La troisième étape est mise en oeuvre par les moyens de contrôle ou d'autres moyens tels que, dans l'exemple décrit, un authentificateur.

A l'instar de ce qui a été décrit plus haut dans la réalisation dédiée à l'authentification, le système spécialement destiné à la mise en oeuvre du procédé de contrôle qui vient d'être décrit comporte la combinaison:
o d'au moins une base de données d'indicateurs d'objets 4 apte à comporter, pour chaque code d'identification, l'indicateur 42,
o d'au moins une base de données de qualités d'objets 5 apte à comporter pour chaque indicateur, la qualité supposée 511,
o d'au moins un serveur contenant cette au moins une base de données d'indicateurs d'objets 4,
o d'au moins un serveur contenant cette au moins une base de données de qualités d'objets 5,
o d'au moins un réseau de télécommunication 3, apte à permettre de communiquer avec les dits au moins un serveur,
o d'un terminal 2 doté de capacités de télécommunication avec le au moins un réseau de télécommunication 3 et pourvu en outre d'un dispositif 21 de lecture et/ou de saisie et/ou de captation de tels dits codes d'identification,
o d'au moins un module de calcul et de premiers moyens de comparaison entre l'expression d'une qualité constatée et l'expression d'une qualité supposée 511.

Les autres caractéristiques du système sont analogues à celles précdemment décrites.

En ce qui concerne le moyen pour disposer de l'expression de la qualité constatée, il s'agit d'un moyen humain ou d'un moyen automatique, incluant notamment la géolocalisation dans le cas où la qualité est un lieu.

## Revendications

1. Procédé de contrôle spécialement destiné à contrôler l'authenticité d'un objet en vue de déterminer si cet objet est authentique, dans lequel :
• D'une part,
o on dispose d'objets préalablement pourvus d'un marqueur (11) incluant un code d'identification de l'objet (1), l'objet ayant un lieu constaté où il se trouve réellement et un lieu supposé où il est supposé se trouver s'il est authentique, le lieu pouvant être exprimé au moyens de signes (lettres, chiffres, symboles...) susceptibles d'être transmis par télécommunication et traités de manière automatisée,
o il a été constitué d'abord, au moins une base de données d'indicateurs d'objets (4) comportant, pour chaque code d'identification, un indicateur (42) apte à permettre d'identifier l'objet, au moins un serveur contenant cette au moins une base de données (4) étant accessible via au moins un réseau de télécommunication (3),
o il a été constitué - et actualisé - ensuite, au moins une base de données de lieux d'objets (5) comportant pour chaque indicateur, l'expression du lieu supposé (511), au moins un serveur contenant cette au moins une base de données (5) étant accessible via au moins un réseau de télécommunication (3),
o on dispose d'un terminal (2) doté de capacités de télécommunication avec le au moins un réseau de télécommunication (3) et d'un dispositif (21) de lecture et/ou de saisie et/ou de captation de tels dits codes d'identification, le cas échéant d'un dispositif de communication visuelle et/ou sonore,
o on dispose d'au moins un module de calcul et de moyens de comparaison entre l'expression du lieu constaté et l'expression du lieu supposé (511),
• D'autre part, on dispose du lieu constaté où se trouve réellement l'objet,
• Et, dans une première étape :
o on met en oeuvre le terminal (2) et on procède à la lecture et/ou saisie et/ou captation du code d'identification de l'objet (1) à contrôler,
o puis, le terminal (2) ayant été connecté au serveur contenant la au moins une base de données d'indicateurs d'objet, on détermine au moyen d'un module de calcul, et à partir de la au moins une base de données d'indicateurs d'objets (4), l'indicateur (42) correspondant au code d'identification lu, saisi ou capté par le terminal (2),
o enfin, on envoie l'indicateur (42) au terminal (2) via le au moins un réseau de télécommunication (3),
• Dans une deuxième étape :
o le terminal (2) étant connecté au serveur contenant la au moins une base de données de qualités d'objets (5), on détermine au moyen d'un module de calcul (24) et à partir de la au moins une base de données de lieux d'objets (5) l'expression du lieu supposé (511),
o puis, on envoie l'expression dudit lieu supposé (511) sur le terminal (2),
o puis, on procède à une première comparaison entre l'expression du lieu constaté et l'expression du lieu supposé (511),
• Dans une troisième étape, on interprète que le lieu constaté correspond au lieu supposé (511) comme significatif que l'objet est authentique et, inversement, on interprète que le lieu constaté ne correspond pas au lieu supposé (511) comme significatif que l'objet est contrefait.

2. Procédé selon la revendication 1, **caractérisé en ce que**, à la fin de la première étape, on procède à une seconde comparaison entre l'indicateur (42) transmis par le terminal (2) et des données de l'objet (1) lui-même en correspondance avec l'indicateur.

3. Procédé selon l'une quelconque des revendications 1 et 2, **caractérisé en ce que** l'on effectue au moins partiellement simultanément la première étape et la deuxième étape.

4. Procédé l'une quelconque des revendications 1 à 3, **caractérisé par le fait que** l'on met en oeuvre le dispositif de communication visuelle et/ou sonore du terminal afin de communiquer un message spécifique sur la première et/ou la seconde comparaison.

5. Procédé selon l'une quelconque des revendications 1 à 4, **caractérisé par le fait que** l'on dispose du lieu constaté où se trouve réellement l'objet par géolocalisation.

6. Système spécialement destiné à la mise en oeuvre du procédé de contrôle d'authenticité selon l'une quelconque des revendications 1 à 5, **caractérisé en ce qu'**il comporte la combinaison:
o d'au moins une base de données d'indicateurs d'objets (4) apte à comporter, pour chaque code d'identification, l'indicateur (42),
o d'au moins une base de données de lieux d'objets (5) apte à comporter pour chaque indicateur, le lieu supposé (511),
o d'au moins un serveur contenant cette au moins une base de données d'indicateurs d'objets (4),
o d'au moins un serveur contenant cette au moins une base de données de lieux d'objets (5),
o d'au moins un réseau de télécommunication (3), apte à permettre de communiquer avec les dits au moins un serveur,
o d'un terminal (2) doté de capacités de télécommunication avec le au moins un réseau de télécommunication (3) et pourvu en outre d'un dispositif (21) de lecture et/ou de saisie et/ou de captation de tels dits codes d'identification,
o d'au moins un module de calcul et de premiers moyens de comparaison entre l'expression du lieu constaté et l'expression du lieu supposé (511).

7. Système selon la revendication 6, **caractérisé par le fait que** le serveur contenant la au moins une base de données d'indicateurs d'objets (4) et le serveur contenant la au moins une base de données de lieux d'objets (5) sont les mêmes.

8. Système selon la revendication 6, **caractérisé par le fait que** le serveur contenant la au moins une base de données d'indicateurs d'objets (4) et le serveur contenant la au moins une base de données de lieux d'objets (5) sont distincts.

9. Système selon l'une quelconque des revendications 6 à 8, **caractérisé par le fait que** les premiers moyens de comparaison sont associés, notamment situés dans, un serveur.

10. Système selon l'une quelconque des revendications 6 à 8, **caractérisé par le fait que** les premiers moyens de comparaison sont associés, notamment situés dans, le terminal.

11. Système selon l'une quelconque des revendications 6 à 10, **caractérisé par le fait que** le module de calcul est associé, notamment situé dans, un serveur.

12. Système selon l'une quelconque des revendications 6 à 10, **caractérisé par le fait que** le module de calcul est associé, notamment situé dans, le terminal.

13. Système selon l'une quelconque des revendications 6 à 12, **caractérisé par le fait qu'**il comporte en outre des seconds moyens de comparaison.

14. Système selon l'une quelconque des revendications 6 à 13, **caractérisé en ce qu'**il comprend en outre des moyens de géolocalisation du terminal (2).

15. Procédé de contrôle d'un objet en vue de déterminer si sa qualité constatée correspond ou non à sa qualité supposée, la qualité pouvant être exprimée au moyens de signes (lettres, chiffres, symboles...), dans lequel :
• D'une part,
o on dispose d'objets préalablement pourvus d'un marqueur (11) incluant un code d'identification de l'objet (1),
o il a été constitué d'abord, au moins une base de données d'indicateurs d'objets (4) comportant, pour chaque code d'identification, un indicateur (42) apte à permettre d'identifier l'objet, au moins un serveur contenant cette au moins une base de données (4) étant accessible via au moins un réseau de télécommunication (3),
o il a été constitué - et actualisé - ensuite, au moins une base de données de qualités d'objets (5) comportant pour indicateur, l'expression de la qualité supposée (511), au moins un serveur contenant cette au moins une base de données (5) étant accessible via au moins un réseau de télécommunication (3),
o on dispose d'un terminal (2) doté de capacités de télécommunication avec le au moins un réseau de télécommunication (3) et d'un dispositif (21) de lecture et/ou de saisie et/ou de captation de tels dits codes d'identification, le cas échéant d'un dispositif de communication visuelle et/ou sonore,
o on dispose d'au moins un module de calcul et de moyens de comparaison entre l'expression d'une qualité constatée et l'expression d'une qualité supposée (511),
• D'autre part, on dispose de l'expression de la qualité constatée,
• Et, dans une première étape :
o on met en oeuvre le terminal (2) et on procède à la lecture et/ou saisie et/ou captation du code d'identification de l'objet (1) à contrôler,
o puis, le terminal (2) ayant été connecté au serveur contenant la au moins une base de données d'indicateurs d'objet, on détermine au moyen d'un module de calcul, et à partir de la au moins une base de données d'indicateurs d'objets (4), l'indicateur (42) correspondant au code d'identification lu, saisi ou capté par le terminal (2),
o enfin, on envoie l'indicateur (42) au terminal (2) via le au moins un réseau de télécommunication (3),
• Dans une deuxième étape :
o le terminal (2) étant connecté au serveur contenant la au moins une base de données de qualités d'objets (5), on détermine au moyen d'un module de calcul (24) et à partir de la au moins une base de données de qualités d'objets (5) l'expression de la qualité supposée (511),
o puis, on envoie l'expression de la dite qualité supposée (511) sur le terminal (2),
o enfin, on procède à une première comparaison entre l'expression de la qualité constatée et l'expression de la qualité supposée (511) et on en déduit que l'objet (1) a ou non la qualité supposée.

16. Procédé selon la revendication 15, dans lequel on associe l'objet à une personne, un service ou un produit ayant une qualité constatée et une qualité supposée et, une fois que l'on a déduit que l'objet (1) a ou non la qualité supposée, on déduit que ce à quoi est associé l'objet a ou non la qualité supposée qui le concerne.

17. Procédé selon l'une quelconque des revendications 15 et 16, **caractérisé en ce que**, à la fin de la première étape, on procède à une seconde comparaison entre l'indicateur (42) transmis par le terminal (2) et l'indicateur de l'objet (1) lui-même.

18. Procédé selon l'une quelconque des revendications 15 à 17, **caractérisé en ce que**, dans une troisième étape, on interprète que l'objet (1) a ou non la qualité supposée, comme significatif que l'objet ou ce qui lui est associé a ou non une propriété liée à l'identité ou non entre la qualité constatée et la qualité supposée.

19. Procédé selon l'une quelconque des revendications 15 à 18, **caractérisé en ce que** l'on effectue au moins partiellement simultanément la première étape et la deuxième étape.

20. Procédé selon l'une quelconque des revendications 15 à 19, **caractérisé par le fait que** l'on met en oeuvre le dispositif de communication visuelle et/ou sonore du terminal afin de communiquer un message spécifique sur la première et/ou la seconde comparaison.

21. Procédé selon l'une quelconque des revendications 15 à 20, **caractérisé par le fait que** l'on dispose de l'expression de la qualité constatée par un moyen humain ou un moyen automatique, incluant notamment la géolocalisation.

22. Procédé de contrôle selon l'une quelconque des revendications 15 à 21, spécialement destiné à contrôler l'authenticité d'un objet en vue de déterminer si cet objet est authentique, dans lequel :
• il a été constitué - et actualisé -, la au moins une base de données de lieux d'objets (5) comportant pour chaque indicateur, l'expression du lieu (511) où l'objet est supposer se trouver,
• on dispose du lieu constaté où se trouve l'objet,
• on dispose de moyens de comparaison entre le lieu constaté et le lieu où l'objet est supposé se trouver (511),
• dans la deuxième étape on procède à une première comparaison entre le lieu constaté et le lieu supposé (511),
• dans la troisième étape, on interprète que le lieu constaté correspond au lieu supposé (511) comme significatif que l'objet est authentique et, inversement, on interprète que le lieu constaté ne correspond pas au lieu supposé (511) comme significatif que l'objet est contrefait.

23. Système spécialement destiné à la mise en oeuvre du procédé de contrôle selon l'une quelconque des revendications 15 à 22, **caractérisé en ce qu'**il comporte la combinaison:
o d'au moins une base de données d'indicateurs d'objets (4) apte à comporter, pour chaque code d'identification, l'indicateur (42),
o d'au moins une base de données de qualités d'objets (5) apte à comporter pour chaque indicateur, la qualité supposée (511),
o d'au moins un serveur contenant cette au moins une base de données d'indicateurs d'objets (4),
o d'au moins un serveur contenant cette au moins une base de données de qualités d'objets (5),
o d'au moins un réseau de télécommunication (3), apte à permettre de communiquer avec les dits au moins un serveur,
o d'un terminal (2) doté de capacités de télécommunication avec le au moins un réseau de télécommunication (3) et pourvu en outre d'un dispositif (21) de lecture et/ou de saisie et/ou de captation de tels dits codes d'identification,
o d'au moins un module de calcul et de premiers moyens de comparaison entre l'expression d'une qualité constatée et l'expression d'une qualité supposée (511).

24. Système selon la revendication 23, **caractérisé par le fait que** le serveur contenant la au moins une base de données d'indicateurs d'objets (4) et le serveur contenant la au moins une base de données de qualités d'objets (5) sont les mêmes.

25. Système selon la revendication 24, **caractérisé par le fait que** le serveur contenant la au moins une base de données d'indicateurs d'objets (4) et le serveur contenant la au moins une base de données de qualités d'objets (5) sont distincts.

26. Système selon l'une quelconque des revendications 23 à 25, **caractérisé par le fait que** les premiers moyens de comparaison sont associés, notamment situés dans, un serveur.

27. Système selon l'une quelconque des revendications 23 à 26, **caractérisé par le fait que** les premiers moyens de comparaison sont associés, notamment situés dans, le terminal.

28. Système selon l'une quelconque des revendications 25 à 27, **caractérisé par le fait que** le module de calcul est associé, notamment situé dans, un serveur.

29. Système selon l'une quelconque des revendications 25 à 27, **caractérisé par le fait que** le module de calcul est associé, notamment situé dans, le terminal.

30. Système selon l'une quelconque des revendications 25 à 29, **caractérisé par le fait qu'**il comporte en outre des seconds moyens de comparaison.

31. Système selon l'une quelconque des revendications 25 à 29, **caractérisé par le fait que** le moyen pour disposer de l'expression de la qualité constatée est un moyen humain ou un moyen automatique, incluant notamment la géolocalisation.
